# EUROPEAN PATENT APPLICATION

(11) **EP 4 641 273 A1**
(43) Date of publication of application: **29.10.2025**
(21) Application number: 23914425.6
(22) Date of filing: 22.11.2023
(51) Int. Cl.: G02B 6/42

(54) **OPTICAL DEVICE, OPTICAL MODULE, AND ELECTRONIC APPARATUS**

(30) Priority: 04.01.2023 CN 202310010202
(71) Applicant: Huawei Technologies Co., Ltd., Shenzhen, Guangdong 518129 (CN)
(72) Inventor: CHEN, Liuyong, Shenzhen, Guangdong 518129 (CN); LU, Weidong, Shenzhen, Guangdong 518129 (CN); CAO, Longgui, Shenzhen, Guangdong 518129 (CN); HE, Linfeng, Shenzhen, Guangdong 518129 (CN)
(74) Representative: Pfenning, Meinig & Partner mbB
(86) International application number: PCT/CN2023/133486
(87) International publication number: WO 2024/146290

(57) **Abstract**

Embodiments of this application provide an optical component, an optical module, and an electronic device, and relate to the field of optical communication technologies, to reduce costs of the optical component. The optical component includes a first laser having a first light outlet and a second light outlet, a second laser having a third light outlet and a fourth light outlet, a first lens, a second lens, and an optical multiplexer. The first light outlet is configured to emit a first light beam. The second light outlet is configured to emit a second light beam. The third light outlet is configured to emit a third light beam. The fourth light outlet is configured to emit a fourth light beam. The first lens is configured to separately collimate the first light beam and the second light beam, and emit a first collimated light beam and a second collimated light beam. The second lens is configured to separately collimate the third light beam and the fourth light beam, and emit a third collimated light beam and a fourth collimated light beam. The optical multiplexer is configured to combine the first collimated light beam and the third collimated light beam; and is configured to combine the second collimated light beam and the fourth collimated light beam.

## Description

This application claims priority to Chinese Patent Application No. 202310010202.3, filed with the China National Intellectual Property Administration on January 4, 2023 and entitled "OPTICAL COMPONENT, OPTICAL MODULE, and ELECTRONIC DEVICE", which is incorporated herein by reference in its entirety.

### TECHNICAL FIELD

This application relates to the field of optical communication technologies, and in particular, to an optical component, an optical module, and an electronic device.

### BACKGROUND

With development of optical communication technologies, people have increasingly higher requirements for a bandwidth. A high-rate optical module is an inevitable trend for future development of optical communication technologies. Currently, a rate of an optical module has rapidly increased from early 10 G to current 400 G or even 800 G.

A quantity of channels may be increased to increase the rate of the optical module. However, an increase in the quantity of channels leads to an increase in a size, costs, and power consumption of the optical module.

### SUMMARY

Embodiments of this application provide an optical component, an optical module, and an electronic device, to reduce costs and a size of the optical component.

To achieve the foregoing objective, the following technical solutions are used in this application.

A first aspect of embodiments of this application provides an optical component, including a first laser having a first light outlet and a second light outlet, a second laser having a third light outlet and a fourth light outlet, a first lens located on a light emergence side of the first laser, a second lens located on a light emergence side of the second laser, and an optical multiplexer located on a light emergence side of the first lens and the second lens. The first light outlet is configured to emit a first light beam. The second light outlet is configured to emit a second light beam. The third light outlet is configured to emit a third light beam. The fourth light outlet is configured to emit a fourth light beam. The first lens is configured to separately collimate the first light beam and the second light beam, and emit a first collimated light beam and a second collimated light beam. The second lens is configured to separately collimate the third light beam and the fourth light beam, and emit a third collimated light beam and a fourth collimated light beam. The optical multiplexer is configured to combine the first collimated light beam and the third collimated light beam, and emit a first combined light beam; and is configured to combine the second collimated light beam and the fourth collimated light beam, and emit a second combined light beam.

Compared with an existing solution in which one laser has only one light outlet, and one laser corresponds to one lens, in embodiments of this application, both the first laser and the second laser have two light outlets that can emit two beams of light, and one laser corresponds to one lens. To be specific, the first laser corresponds to the first lens, and the second laser corresponds to the second lens. Compared with conventional technologies, quantities of required lasers and lenses are reduced by half.

In addition, in the conventional technologies, for an 800 G 2*FR4 multi-channel parallel optical component, two optical multiplexers need to be disposed. However, in embodiments of this application, only one optical multiplexer is required, and collimated light beams that are separately collimated by the lens are incident to the optical multiplexer.

In addition, a first angle of incidence at which the first collimated light beam is incident to the optical multiplexer is the same as a third angle of incidence at which the third collimated light beam is incident to the optical multiplexer, and a second angle of incidence at which the second collimated light beam is incident to the optical multiplexer is the same as a fourth angle of incidence at which the fourth collimated light beam is incident to the optical multiplexer, so that the first collimated light beam and the third collimated light beam can be combined into the first combined light beam by using the optical multiplexer, and the second collimated light beam and the fourth collimated light beam can be combined into the second combined light beam by using the optical multiplexer.

In addition, the first angle of incidence is different from the second angle of incidence, and the third angle of incidence is different from the fourth angle of incidence, so that an angle of emergence of the first combined light beam is different from an angle of emergence of the second combined light beam, to subsequently transmit the light beams through two channels. According to the optical component provided in embodiments of this application, a quantity of optical elements used in the optical component can be reduced, to reduce a size of a packaging structure and simplify a packaging process.

In a possible implementation, at least a first filter and a second filter are disposed on a light incidence surface of the optical multiplexer. The first filter is perpendicular to an optical axis of the first lens. The second filter is perpendicular to an optical axis of the second lens. In this way, the first collimated light beam and the second collimated light beam that are incident to the optical multiplexer can be incident at different angles.

In a possible implementation, a distance from the first light outlet to the optical axis of the first lens is the same as a distance from the second light outlet to the optical axis of the first lens. A distance from the third light outlet to the optical axis of the second lens is the same as a distance from the fourth light outlet to the optical axis of the second lens. In this way, an included angle between the optical axis and the first collimated light beam collimated by the first lens and an included angle between the optical axis and the second collimated light beam collimated by the first lens have a same value and are in opposite directions. An included angle between the optical axis and the third collimated light beam collimated by the second lens and an included angle between the optical axis and the fourth collimated light beam collimated by the second lens have a same value and are in opposite directions.

In a possible implementation, both the first light outlet and the second light outlet are located on a focal plane of the first lens. Both the third light outlet and the fourth light outlet are located on a focal plane of the second lens. In this way, the first light beam and the second light beam that are emitted from the first laser may form the first collimated light beam and the second collimated light beam after passing through the first lens. The third light beam and the fourth light beam that are emitted from the second laser may form the third collimated light beam and the fourth collimated light beam after passing through the second lens.

In a possible implementation, a wavelength of the first light beam is the same as a wavelength of the second light beam, and a wavelength of the third light beam is the same as a wavelength of the fourth light beam.

In a possible implementation, the wavelength of the first light beam is different from the wavelength of the third light beam, and the wavelength of the second light beam is different from the wavelength of the fourth light beam.

In a possible implementation, the optical component further includes a first converging lens and a second converging lens. The first converging lens and the second converging lens are located on a light emergence side of the optical multiplexer. The first converging lens is configured to converge the first combined light beam. The second converging lens is configured to converge the second combined light beam. In this way, the first combined light beam and the second combined light beam can be further converged to an optical fiber ferrule.

In a possible implementation, the optical component further includes a first isolator and a second isolator. The first isolator and the second isolator are located on the light emergence side of the optical multiplexer. In this way, the first combined light beam and the second combined light beam can be transmitted unidirectionally. Therefore, the light beams are prevented from being reflected to the laser.

In a possible implementation, the optical component further includes a first optical fiber ferrule and a second optical fiber ferrule. The first optical fiber ferrule is configured to receive the first combined light beam. The second optical fiber ferrule is configured to receive the second combined light beam. In this way, an optical signal can be transmitted.

A second aspect of embodiments of this application provides an optical module, including the optical component according to the first aspect and a receiving optical sub-assembly. The receiving optical sub-assembly receives an optical signal transmitted by the optical component.

The optical module provided in the second aspect of embodiments of this application includes the optical component according to the first aspect. Beneficial effects of the optical module are the same as those of the optical component. Details are not described herein again.

A third aspect of embodiments of this application provides an electronic device, including the optical module according to the second aspect. The optical module is electrically connected to a printed circuit board.

The electronic device provided in the third aspect of embodiments of this application includes the optical module according to the second aspect. Beneficial effects of the electronic device are the same as those of the optical module. Details are not described herein again.

### BRIEF DESCRIPTION OF DRAWINGS

FIG. 1 is a schematic structural diagram of a data center network system according to an embodiment of this application;
FIG. 2 is a schematic structural diagram of an optical component according to an embodiment of this application;
FIG. 3 is a schematic structural diagram of another optical component according to an embodiment of this application;
FIG. 4 is a schematic structural diagram of another optical component according to an embodiment of this application;
FIG. 5A is a schematic structural diagram of another optical component according to an embodiment of this application;
FIG. 5B is a schematic structural diagram of another optical component according to an embodiment of this application;
FIG. 5C is a schematic structural diagram of another optical component according to an embodiment of this application;
FIG. 6 is a schematic structural diagram of another optical component according to an embodiment of this application;
FIG. 7 is a schematic structural diagram of another optical component according to an embodiment of this application;
FIG. 8 is a schematic structural diagram of another optical component according to an embodiment of this application; and
FIG. 9 is a schematic structural diagram of another optical component according to an embodiment of this application.

### Reference numerals:

1-Data center network system; 2-Network; 3-Data center network; 31-Border leaf switch; 32-Spine switch; 33-Leaf switch; 4-Server; 10-Optical component; 21-Laser; 22-Modulator; 23-Optical multiplexer; 31-Laser; 32-Lens; 33-Optical multiplexer; 34-Optical fiber ferrule; 110-First laser; 120-Second laser; 101-First light outlet; 102-Second light outlet; 103-Third light outlet; 104-Fourth light outlet; 120-First lens; 220-Second lens; 310-Optical multiplexer; 311-First filter; 312-Second filter; 410-First optical fiber ferrule; 420-Second optical fiber ferrule; 510-First isolator; 520-Second isolator; 610-First converging lens; and 620-Second converging lens.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The following terms such as "first" and "second" are merely used for ease of description, and shall not be understood as an indication or implication of relative importance or an implicit indication of a quantity of indicated technical features. Therefore, a feature limited by "second", "first", and the like may explicitly or implicitly include one or more features. In descriptions of this application, unless otherwise stated, "a plurality of" means two or more than two.

In addition, in embodiments of this application, orientation terms such as "up", "down", "left", and "right" may include but are not limited to definitions based on illustrated orientations in which components in the accompanying drawings are placed. It should be understood that, these directional terms may be relative concepts, are used for relative description and clarification, and may change correspondingly based on changes in the orientations in which the components in the accompanying drawings are placed in the accompanying drawings.

In embodiments of this application, unless otherwise clearly specified and limited, the term "connection" should be understood in a broad sense. For example, the "connection" may be a fixed connection, a detachable connection, or an integrated connection, or may be a direct connection or an indirect connection implemented through an intermediate medium. In addition, the term "coupled" may be "directly electrically connected", or may be "indirectly electrically connected through an intermediate medium". The term "contact" may be direct contact, or may be indirect contact implemented through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

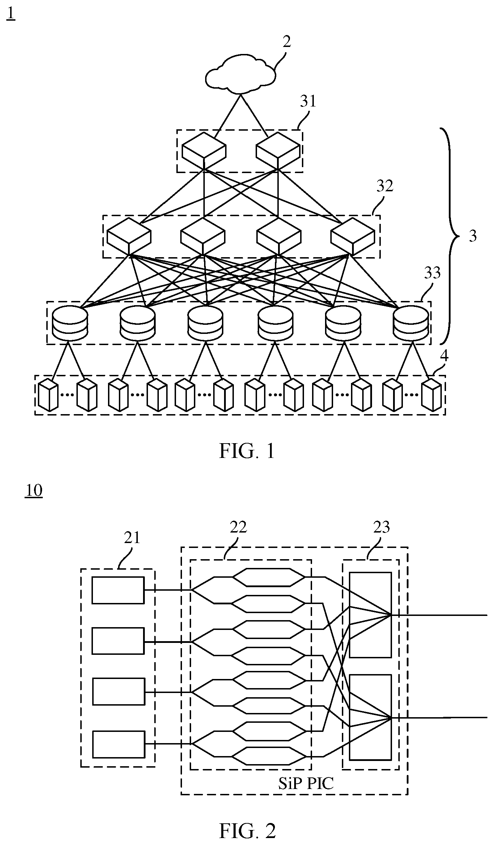

Embodiments of this application provide a data center network system. As shown in FIG. 1, a data center (data center) network system 1 mainly includes a network 2, a data center network 3, and a server (server) 4.

The data center network 3 is connected to the network 2 in an upstream direction, and is connected to the server 4 in a downstream direction.

For example, as shown in FIG. 1, the data center network 3 includes a border leaf switch 31, a spine switch 32, and a leaf switch 33. The border leaf switch 31 is connected to the network 2 in an upstream direction, and is connected to the spine switch 32 in a downstream direction. The spine switch 32 is connected to the border leaf switch 31 in an upstream direction, and is connected to the leaf switch 33 in a downstream direction. The leaf switch 33 is connected to the spine switch 32 in an upstream direction, and is connected to the server 4 in a downstream direction.

A plurality of border leaf switches 31 form a border leaf switch layer. A plurality of spine switches form a spine switch layer. A plurality of leaf switches 31 form a leaf switch layer.

The spine switch 32 is a switch that performs a converging function for the leaf switch 33. Generally, the spine switch 32 is deployed at an upper layer of the leaf switch 33, and is configured to implement a packet routing or forwarding function between the leaf switches 33. To implement non-blocking forwarding, the spine switch 32 and the leaf switch 33 are generally connected through Clos networking. To be specific, for a multi-layer network architecture, each switching device at each layer is connected to all switching devices at a lower layer, so that a non-blocking (non-blocking), re-arrangeable (re-arrangeable), and scalable (scalable) architecture can be implemented. For example, the border leaf switch 31 and the spine switch 32 are also connected through Clos networking. The leaf switch 33 is generally disposed on the top of a rack of the server 4, serves as an access switch of the rack of the server 4, and is also referred to as a top of rack (top of rack, TOR) switch.

In some embodiments, the data center network system 1 further includes a data center network manager (data center network manager, DCNM) (not shown in the figure). The DCNM is configured to manage, through the network 2, the data center network 3 including a plurality of switches (the border leaf switch 31, the spine switch 32, and the leaf switch 33). For example, the DCNM may be implemented in a form of a server, and an application APP responsible for managing a network is integrated on the DCNM.

Embodiments of this application provide an optical module. The optical module may be disposed in the foregoing data center network system 1. Alternatively, the optical module may be disposed in any communication device that needs to receive a plurality of different wavelengths. This is not limited in embodiments of this application, and the optical module may be appropriately disposed based on an actual requirement.

Currently, three main solutions are available to increase a rate of the optical module. In a first solution, the rate of the optical module may be increased by increasing a rate of an optoelectronic chip inside the optical module. For example, performance of an optical modulator and an optoelectronic detector may be improved, and a rate of the optical modulator may be increased, thereby increasing a transmission rate of a single wavelength. In a second solution, the rate of the optical module may be increased by using a high-order modulation technology. In a third solution, the rate of the optical module may be increased by increasing a quantity of channels.

However, in the first solution, a breakthrough needs to be made on the optoelectronic chip to increase the rate of the optoelectronic chip. High costs are required to increase the rate of the optoelectronic chip, and a technology is not mature. Consequently, it needs to take very long time to implement the solution.

In the second solution, as the rate of the optical module increases from 100 G to 400 G, a modulation form of an intensity modulation/direct detection (IM/DD) optical module is also improved from an on-off keying (on-off keying, OOK) modulation format to pulse amplitude modulation (pulse amplitude modulation 4, PAM4). The high-order modulation leads to a small noise margin for the optical module. Therefore, complex processing circuits are subsequently required.

In the third solution, the rate of the optical module can be quickly increased by increasing the quantity of channels, and the solution has become a most commonly used manner of increasing the rate of the optical module currently. The quantity of channels may be increased by using a plurality of parallel channels or a plurality of serial channels. For example, the plurality of parallel channels may be parallel single mode (parallel single mode, PSM) fibers. The plurality of serial channels may be combined by using an optical multiplexer (optical multiplexer, OMUX), to output an optical signal.

In some embodiments, the optical module is electrically connected to a printed circuit board (printed circuit board, PCB) and is integrated into an electronic device. The electronic device may include, for example, a server, a switch, an optical fiber network adapter, and an optical fiber transceiver.

For example, the optical module includes a transmitting optical sub-assembly (transmitting optical sub-assembly, TOSA) and a receiving optical sub-assembly (receiving optical sub-assembly, ROSA). Both the transmitting optical sub-assembly and the receiving optical sub-assembly are electrically connected to the printed circuit board.

For example, the transmitting optical sub-assembly includes an electro-optical conversion chip and a monitor photodiode (MD). The electro-optical conversion chip and the monitor photodiode are packaged together to form the transmitting optical sub-assembly. The electro-optical conversion chip may be, for example, a chip including a laser diode (laser diode, LD) or a chip including a semiconductor light emitting diode. The electro-optical conversion chip receives an electrical signal that carries sending information and that is transmitted by the PCB, converts the electrical signal into an optical signal, and outputs the optical signal through an optical component 10.

For example, the receiving optical sub-assembly includes a photoelectric conversion chip and an amplifier. The photoelectric conversion chip and the amplifier are packaged together to form the receiving optical sub-assembly. For example, the photoelectric conversion chip may be a chip including a photodiode (photodiode, PD), a chip including a PIN diode (pin diode), or a chip including an avalanche photodiode (avalanche photodiode, APD). The photoelectric conversion chip converts a received optical signal into an electrical signal, and then transmits the electrical signal to the amplifier. The amplifier amplifies the electrical signal, and transmits an amplified electrical signal to the PCB.

The following uses an example in which the optical component provided in embodiments of this application is the transmitting optical sub-assembly for description.

To increase the rate of the optical module by increasing a quantity of channels, an integrated chip solution or a discrete device solution may be generally used.

An 800 G optical component is used as an example to illustrate a multi-channel serial optical component based on an integrated chip solution. As shown in FIG. 2, the optical component 10 includes a laser 21, a modulator 22, and an optical multiplexer 23.

Both the modulator 22 and the optical multiplexer 23 are integrated on a photonic integrated circuit (photonic integrated circuit, PIC) that is integrated and packaged based on silicon photonics (silicon photonics, SiP).

However, due to a limitation of a characteristic of a silicon-based material, the optical component 10 based on the integrated chip solution cannot be monolithically integrated with a laser chip, and requires an external light source or an on-chip hybrid integrated light source. Therefore, process complexity of the optical component 10 based on the integrated chip solution is increased. For an 800 G 2*FR4 (far reach) multi-channel serial solution, at least four to eight extra lasers are required to transmit an optical signal.

In the foregoing solution, a plurality of lasers are required. The optical multiplexer 23 needs to be integrated on the SiP PIC, occupying a specific SiP chip area, and a SiP chip structure required by the optical multiplexer 23 is complex. Therefore, a size and costs of the optical component 10 are increased.

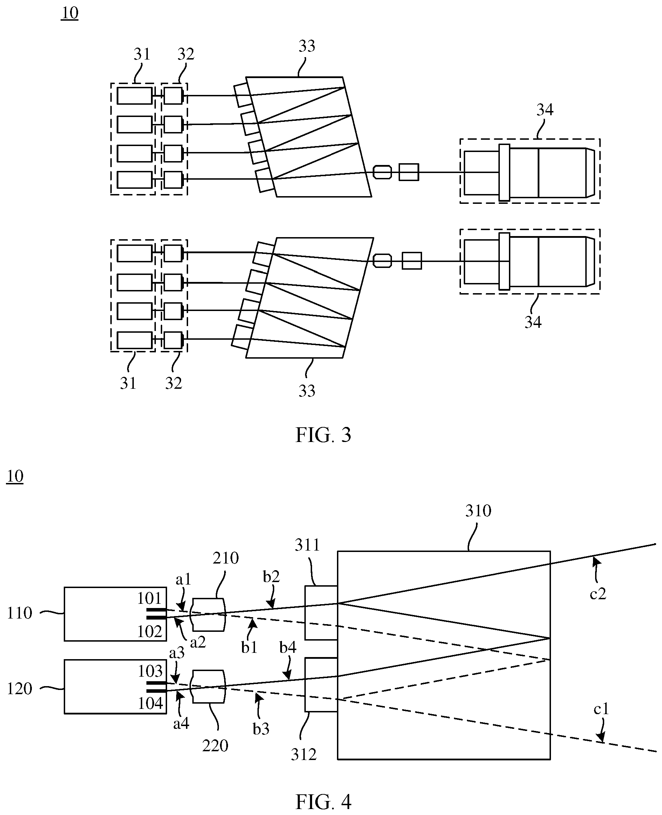

Embodiments of this application further show an optical component. The optical component is a multi-channel serial solution based on a discrete device. As shown in FIG. 3, the optical component 10 includes a plurality of lasers 31, a plurality of lenses 32, a plurality of optical multiplexers 33, and a plurality of optical fiber ferrules 34. The plurality of lasers 41 emit a plurality of light beams. The plurality of light beams are respectively incident to the plurality of optical multiplexers 33 through the plurality of lenses 32. Light beams of four channels are incident to a same optical multiplexer 33 and then combined for output. Light beams of another four channels are incident to another optical multiplexer 33 and then combined for output.

In the multi-channel serial solution based on a discrete device, an increase in a quantity of channels leads to an increase in a quantity of lasers and a quantity of lenses in the optical component 10, and an increase in complexity of the optical component 10 and a quantity of optical elements, leading to an increase in a size, costs, and power consumption of an optical module. Specifically, when the optical module is upgraded from a 400 G 4-channel (400 G FR4) optical module to an 800 G 8-channel (800 G 2*FR4) optical module, the quantity of channels is multiplied, leading to an increase in a package size of the optical component. Consequently, it is difficult to miniaturize the optical component.

In view of this, to reduce the size and the costs of the optical component, embodiments of this application further provide an optical component.

As shown in FIG. 4, the optical component 10 includes a first laser 110, a second laser 120, a first lens 210, a second lens 220, and an optical multiplexer 310.

The first laser 110 corresponds to the first lens 210. The second laser 120 corresponds to the second lens 220. The first lens 210 is located on a light emergence side of the first laser 110. The second lens 220 is located on a light emergence side of the second laser 120.

In embodiments of this application, only an example in which the first laser 110 corresponds to the first lens 210 and the second laser 120 corresponds to the second lens 220 is used for description. A specific quantity of lasers and a specific quantity of lenses are not limited. It is explained herein that the quantity of lasers may be the same as or different from the quantity of lenses, provided that one laser corresponds to one lens.

For example, the first laser 110 is a dual-light-outlet laser. As shown in FIG. 4, the first laser 110 has a first light outlet 101 and a second light outlet 102. In other words, the first light outlet 101 and the second light outlet 102 are disposed on the light emergence side of the first laser 110.

The first light outlet 101 is configured to emit a first light beam a1. The second light outlet 102 is configured to emit a second light beam a2. A wavelength of the first light beam a1 may be the same as or different from a wavelength of the second light beam a2. This is not limited in embodiments of this application, and the wavelengths may be appropriately set based on an actual requirement.

Similarly, for example, the second laser 120 is a dual-light-outlet laser. As shown in FIG. 4, the second laser 120 has a third light outlet 103 and a fourth light outlet 104. In other words, the third light outlet 103 and the fourth light outlet 104 are disposed on the light emergence side of the second laser 120.

The third light outlet 103 is configured to emit a third light beam a3. The fourth light outlet 104 is configured to emit a fourth light beam a4. A wavelength of the third light beam a3 may be the same as or different from a wavelength of the fourth light beam a4. This is not limited in embodiments of this application, and the wavelengths may be appropriately set based on an actual requirement.

For example, the wavelength of the first light beam a1 emitted from the first light outlet 101 of the first laser 110 is the same as the wavelength of the second light beam a2 emitted from the second light outlet 102 of the first laser 110. The wavelength of the third light beam a3 emitted from the third light outlet 103 of the second laser 120 is the same as the wavelength of the fourth light beam a4 emitted from the fourth light outlet 104 of the second laser.

A wavelength of a light beam emitted from the first laser 110 may be the same as or different from a wavelength of a light beam emitted from the second laser 120. For example, the wavelength of the first light beam a1 emitted from the first light outlet 101 of the first laser 110 is different from the wavelength of the third light beam a3 emitted from the third light outlet 103 of the second laser 120. The wavelength of the first light beam a1 emitted from the first light outlet 101 of the first laser 110 is different from the wavelength of the fourth light beam a4 emitted from the fourth light outlet 104 of the second laser. The wavelength of the second light beam a2 emitted from the second light outlet 102 of the first laser 110 is different from the wavelength of the third light beam a3 emitted from the third light outlet 103 of the second laser 120. The wavelength of the second light beam a2 emitted from the second light outlet 102 of the first laser 110 is different from the wavelength of the fourth light beam a4 emitted from the fourth light outlet 104 of the second laser.

For the first laser 110, a spacing d1 exists between the first light outlet 101 and the second light outlet 102. For example, the spacing d1 between the first light outlet 101 and the second light outlet 102 is 20 µm to 40 µm. For example, the spacing d1 may be 20 µm, 23 µm, 25 µm, 28 µm, 30 µm, 33 µm, 37 µm, or 40 µm. This is not limited in embodiments of this application, and the spacing may be appropriately set based on an actual requirement.

For example, a distance from a central position of the first light outlet 101 to a central position of the second light outlet 102 is considered as the spacing d1 between the first light outlet 101 and the second light outlet 102.

Alternatively, a distance from a topmost end of the first light outlet 101 to a topmost end of the second light outlet 102 may be considered as the spacing d1 between the first light outlet 101 and the second light outlet 102.

Alternatively, a distance from a bottommost end of the first light outlet 101 to a bottommost end of the second light outlet 102 may be considered as the spacing d1 between the first light outlet 101 and the second light outlet 102.

Similarly, for the second laser 120, a spacing d2 exists between the third light outlet 103 and the fourth light outlet 104. For example, the spacing d2 between the third light outlet 103 and the fourth light outlet 104 is 20 µm to 40 µm. For example, the spacing d2 may be 20 µm, 23 µm, 25 µm, 28 µm, 30 µm, 33 µm, 37 µm, or 40 µm. This is not limited in embodiments of this application, and the spacing may be appropriately set based on an actual requirement. The spacing d1 between the first light outlet 101 and the second light outlet 102 may be the same as the spacing d2 between the third light outlet 103 and the fourth light outlet 104.

Still refer to FIG. 4. The first lens 210 is located on the light emergence side of the first laser 110. After being transmitted through the first lens 210, the first light beam a1 emitted from the first light outlet 101 of the first laser 110 is incident to the optical multiplexer 310. After being transmitted through the first lens 210, the second light beam a2 emitted from the second light outlet 102 of the first laser 110 is incident to the optical multiplexer 310.

The second lens 220 is located on the light emergence side of the second laser 120. After being transmitted through the second lens 220, the third light beam a3 emitted from the third light outlet 103 of the second laser 120 is incident to the optical multiplexer 310. After being transmitted through the second lens 220, the fourth light beam a4 emitted from the fourth light outlet 104 of the second laser 120 is incident to the optical multiplexer 310.

In other words, the first lens 210 is located on an emitting optical path of the first laser 110, and the second lens 220 is located on an emitting optical path of the second laser 120.

For example, as shown in FIG. 4, the first laser 110 and the first lens 210 are sequentially arranged along a first direction x. The first laser 110 and the second laser 120 are sequentially arranged along a second direction y.

The first direction x intersects with the second direction y. For example, the first direction x is perpendicular to the second direction y.

As shown in FIG. 4, the optical multiplexer 310 is located on a light emergence side of the first lens 210 and the second lens 220. The optical multiplexer 310 receives a collimated light beam. In other words, after the first light beam a1 and the second light beam a2 pass through the first lens 210, collimated light beams are formed. After the third light beam a3 and the fourth light beam a4 pass through the second lens 220, collimated light beams are formed.

For example, the first lens 210 is configured to separately collimate the first light beam a1 and the second light beam a2, and emit a first collimated light beam b1 and a second collimated light beam b2.

To be specific, the first lens 210 is configured to collimate the first light beam a1, and emit the first collimated light beam b1. The first lens 210 is further configured to collimate the second light beam a2, and emit the second collimated light beam b2.

The first light beam a1 and the second light beam a2 that are emitted from the first laser 110 are divergent light beams. In other words, an emitted light beam diverges farther as a propagation distance increases. After the divergent light beams are collimated by the first lens 210, the divergent light beams are changed into the collimated light beams (the first collimated light beam b1 and the second collimated light beam b2). All light rays in the collimated light beams are transmitted in parallel.

For example, the first lens 210 may include any one of a Fresnel lens, a holographic lens, or a flat convex lens.

Based on an optical characteristic, light outlets of the first laser 110, that is, the first light outlet 101 and the second light outlet 102 of the first laser 110, are both located on a focal plane of the first lens 210. The first light beam a1 and the second light beam a2 may be collimated by adjusting relative positions of the first laser 110 and the first lens 210.

In other words, distances L1 between the light outlets (the first light outlet 101 and the second light outlet 102) of the first laser 110 and the first lens 210 are equal to a focal length f1 of the first lens 210.

The first lens 210 has an optical axis, that is, a straight line that passes through a center of the first lens 210 and that is perpendicular to the first lens 210. The optical axis in embodiments of this application is as follows: After an incident light is emitted from a lens, the emitted light is still propagated along a straight line in which the incident light is located, and no refraction occurs. Both the incident light and the emitted light are on a straight line. The straight line in which the incident light and the emitted light are located is the optical axis of the lens.

Similarly, for example, the second lens 220 is configured to separately collimate the third light beam a3 and the fourth light beam a4, and emit a third collimated light beam b3 and a fourth collimated light beam b4.

In other words, the second lens 220 is configured to collimate the third light beam a3, and emit the third collimated light beam b3. The second lens 220 is further configured to collimate the fourth light beam a4, and emit the fourth collimated light beam b4.

The third light beam a3 and the fourth light beam a4 that are emitted from the second laser 120 are divergent light beams. After being collimated by the second lens 220, the divergent light beams are changed into the collimated light beams (the third collimated light beam b3 and the fourth collimated light beam b4).

For example, the second lens 220 may include any one of a Fresnel lens, a holographic lens, or a flat convex lens.

Based on an optical characteristic, light outlets of the second laser 120, that is, the third light outlet 103 and the fourth light outlet 104 of the second laser 120, are both located on a focal plane of the second lens 220. The third light beam a3 and the fourth light beam a4 may be collimated by adjusting relative positions of the second laser 120 and the second lens 220.

In other words, distances L2 between the light outlets (the third light outlet 103 and the fourth light outlet 104) of the second laser 120 and the second lens 220 are equal to a focal length f2 of the second lens 220.

For ease of illustration, the following uses a position relationship between the first laser 110 and the first lens 210 as an example for description.

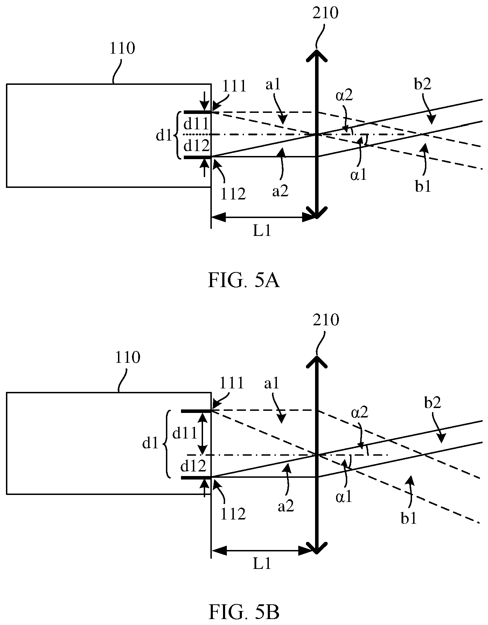

In some embodiments, as shown in FIG. 5A, a distance d11 from the first light outlet 101 to the optical axis of the first lens 210 is equal to a distance d12 from the second light outlet 102 to the optical axis of the first lens 210. The first light outlet 101 and the second light outlet 102 are symmetrical about the optical axis of the first lens 210.

In this case, the spacing d1 between the first light outlet 101 and the second light outlet 102 is a sum of the distance d11 from the first light outlet 101 to the optical axis of the first lens 210 and the distance d12 from the second light outlet 102 to the optical axis of the first lens 210, that is, d1=d11+d12.

In other words, the first light beam a1 and the second light beam a2 are symmetrical about the optical axis of the first lens 210.

In this way, after the first light beam a1 and the second light beam a2 separately pass through the first lens 210, the emitted first collimated light beam b1 and the emitted second collimated light beam b2 are also symmetrical about the optical axis of the first lens 210.

Herein, an included angle between the first collimated light beam b1 and the optical axis is denoted as α1. An included angle between the second collimated light beam b2 and the optical axis is denoted as α2.

As shown in FIG. 5A, a value of the included angle α1 or the included angle α2 is determined by the spacing d1 between the first light outlet 101 and the second light outlet 102 and the distance L1 between the light outlet and the first lens 210.

To be specific, the value of the included angle α1 is determined by the distance d11 from the first light outlet 101 to the optical axis of the first lens 210 and the distance L1 from the first light outlet 101 to the first lens 210, that is, tan α1=d11/L1.

The value of the included angle α2 is determined by the distance d12 from the second light outlet 102 to the optical axis of the first lens 210 and the distance L1 from the second light outlet 102 to the first lens 210, that is, tan α2=d12/L1.

Because the distance d11 from the first light outlet 101 to the optical axis of the first lens 210 is equal to the distance d12 from the second light outlet 102 to the optical axis of the first lens 210, that is, d11=d12, tan α1=tan α2. Therefore, the value of the included angle α1 is the same as the value of the included angle α2.

A direction of the included angle α1 is opposite to a direction of the included angle α1. The direction herein means that using an optical axis as a start end, if the included angle with the optical axis is above the optical axis, the direction of the included angle is denoted as a positive direction, or if the included angle with the optical axis is below the optical axis, the direction of the included angle is denoted as a negative direction. If the included angle α1 is above the optical axis, the direction of the included angle α1 is a positive direction. If the included angle α2 is below the optical axis, the direction of the included angle α2 is a negative direction.

In some other embodiments, as shown in FIG. 5B, the distance d11 from the first light outlet 101 to the optical axis of the first lens 210 is different from the distance d12 from the second light outlet 102 to the optical axis of the first lens 210.

For example, as shown in FIG. 5B, the first light outlet 101 and the second light outlet 102 are located on different sides of the optical axis of the first lens 210. The distance d11 from the first light outlet 101 to the optical axis of the first lens 210 is greater than the distance d12 from the second light outlet 102 to the optical axis of the first lens 210, that is, d11>d12.

In this case, the spacing d1 between the first light outlet 101 and the second light outlet 102 is a sum of the distance d11 from the first light outlet 101 to the optical axis of the first lens 210 and the distance d12 from the second light outlet 102 to the optical axis of the first lens 210, that is, d1=d11+d12.

The value of the included angle α1 is related to the distance d11 from the first light outlet 101 to the optical axis of the first lens 210 and the distance L1 from the first light outlet 101 to the first lens 210, and the value of the included angle α2 is related to the distance d12 from the second light outlet 102 to the optical axis of the first lens 210 and the distance L1 from the second light outlet 102 to the first lens 210, that is, tan α1=d11/L1, and tan α2=d12/L1. Because d11>d12, tan α1>tan α2. That is, α1>α2. Therefore, the value of the included angle α1 is greater than the value of the included angle α2.

In addition, because the included angle α1 and the included angle α2 are respectively above and below the optical axis of the first lens 210, the direction of the included angle α1 is opposite to the direction of the included angle α1.

To be specific, the value of the included angle α1 is different from the value of the included angle α2, and the direction of the included angle α1 is opposite to the direction of the included angle α1.

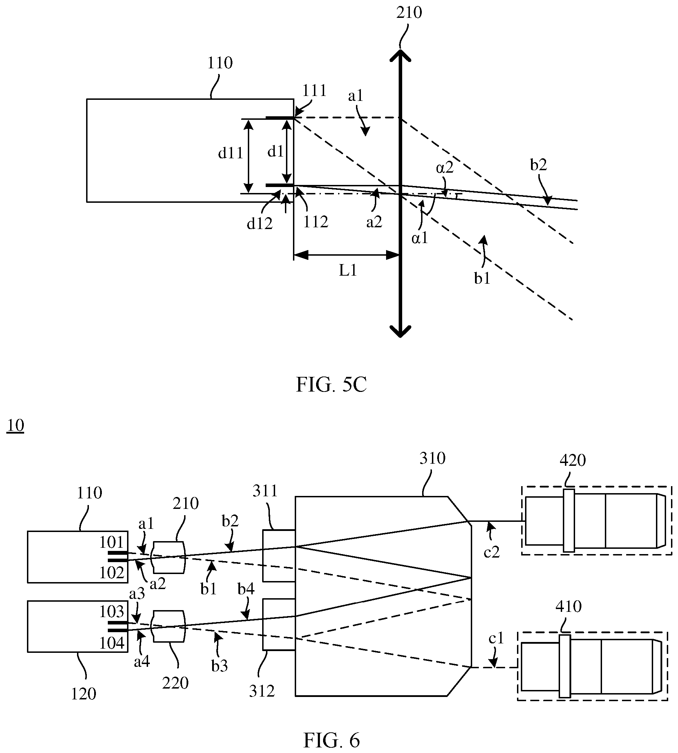

Alternatively, for example, as shown in FIG. 5C, both the first light outlet 101 and the second light outlet 102 are located on the same side of the optical axis of the first lens 210. The distance d11 from the first light outlet 101 to the optical axis of the first lens 210 is greater than the distance d12 from the second light outlet 102 to the optical axis of the first lens 210, that is, d11>d12.

In this case, the spacing d1 between the first light outlet 101 and the second light outlet 102 is a difference between the distance d11 from the first light outlet 101 to the optical axis of the first lens 210 and the distance d12 from the second light outlet 102 to the optical axis of the first lens 210, that is, d1=|d11-d12|.

In this case, the value of the included angle α1 is different from the value of the included angle α2, and the direction of the included angle α1 is opposite to the direction of the included angle α1.

It is explained herein that a position relationship between the second laser 120 and the second lens 220 is the same as the position relationship between the first laser 110 and the first lens 210. For the position relationship between the second laser 120 and the second lens 220, refer to the foregoing descriptions of the position relationship between the first laser 110 and the first lens 210. Details are not described herein again.

For example, the distance L1 from the first laser 110 to the first lens 210 is equal to the distance L2 from the second laser 120 to the second lens 220, that is, L1=L2. The distance d11 from the first light outlet 101 to the optical axis of the first lens 210 is equal to a distance d21 from the third light outlet 103 to an optical axis of the second lens 220, that is, d11=d21. The distance d12 from the second light outlet 102 to the optical axis of the first lens 210 is equal to a distance d22 from the fourth light outlet 104 to the optical axis of the second lens 220, that is, d12=d11. In addition, the distance d11 from the first light outlet 101 to the optical axis of the first lens 210 is equal to the distance d12 from the second light outlet 102 to the optical axis of the first lens 210. The distance d21 from the third light outlet 103 to the optical axis of the second lens 220 is equal to the distance d22 from the fourth light outlet 104 to the optical axis of the second lens 220. That is, d11=d12=d21=d21. In other words, the value of the included angle between the first collimated light beam b1 and the optical axis, the value of the included angle between the second collimated light beam b2 and the optical axis, a value of an included angle between the third collimated light beam b3 and the optical axis, and a value of an included angle between the fourth collimated light beam b4 and the optical axis are equal to each other. The direction of the included angle between the first collimated light beam b1 and the optical axis is the same as a direction of the included angle between the third collimated light beam b3 and the optical axis. The direction of the included angle between the second collimated light beam b2 and the optical axis is the same as a direction of the included angle between the fourth collimated light beam b4 and the optical axis.

Still refer to FIG. 4. The optical multiplexer 310 is located on the light emergence side of the first lens 210 and the second lens 220. The first collimated light beam b1, the second collimated light beam b2, the third collimated light beam b3, and the fourth collimated light beam b4 are all incident to the optical multiplexer 310.

For example, the optical multiplexer 310 is a wavelength division multiplexer (wavelength division multiplexer, WDM) based on a thin film filter (thin film filter, TFF).

As shown in FIG. 4, a first filter 311 and a second filter 312 are disposed on a light incidence surface of the optical multiplexer 310.

The first filter 311 corresponds to the first lens 210. The first lens 210 corresponds to the first laser 110. The second filter 312 corresponds to the second lens 220. The second lens 220 corresponds to the second laser 120.

The first collimated light beam b1 and the second collimated light beam b2 are incident to the optical multiplexer 310 through the first filter 311. The third collimated light beam b3 and the fourth collimated light beam b4 are incident to the optical multiplexer 310 through the second filter 312.

In embodiments of this application, only the foregoing correspondence is used as an example for description. A specific quantity of lasers, a specific quantity of lenses, and a specific quantity of filters on the optical multiplexer 310 are not limited. It is explained herein that the quantity of lasers, the quantity of lenses, and the quantity of filters may be the same, or may be different, provided that one laser corresponds to one lens and further corresponds to one filter.

For example, the first filter 311 and the second filter 312 of the optical multiplexer 310 have a characteristic of transmitting a light beam at a specific angle of incidence and reflecting a light beam at another angle of incidence.

For example, the first filter 311 transmits a light beam emitted from the first laser 110, and reflects light beams emitted from the second laser 120 and another laser. The second filter 312 transmits a light beam emitted from the second laser 120, and reflects light beams emitted from the first laser 110 and another laser.

In other words, the first filter 311 transmits the first collimated light beam b1 and the second collimated light beam b2, and reflects the third collimated light beam b3, the fourth collimated light beam b4, and another light beam. The second filter 312 transmits the third collimated light beam b3 and the fourth collimated light beam b4, and reflects the first collimated light beam b1, the second collimated light beam b2, and another light beam.

For ease of illustration, the following uses d11=d12=d21=d21, and L1=L2 as an example for description. In other words, the value of the included angle between the first collimated light beam b1 and the optical axis, the value of the included angle between the second collimated light beam b2 and the optical axis, the value of the included angle between the third collimated light beam b3 and the optical axis, and the value of the included angle between the fourth collimated light beam b4 and the optical axis are the same. The direction of the included angle between the first collimated light beam b1 and the optical axis is the same as the direction of the included angle between the third collimated light beam b3 and the optical axis. The direction of the included angle between the second collimated light beam b2 and the optical axis is the same as the direction of the included angle between the fourth collimated light beam b4 and the optical axis.

Still refer to FIG. 4. The first filter 311 intersects with the optical axis of the first lens 210. The second filter 312 intersects with the optical axis of the second lens 220.

For example, as shown in FIG. 4, the first filter 311 is perpendicular to the optical axis of the first lens 210. The second filter 312 is perpendicular to the optical axis of the second lens 220.

In this way, a first angle of incidence β1 of the first collimated light beam b1 incident to the first filter 311 of the optical multiplexer 310 and a second angle of incidence β2 of the second collimated light beam b2 incident to the first filter 311 of the optical multiplexer 310 have a same value and are in opposite directions. A third angle of incidence β3 of the third collimated light beam b3 incident to the second filter 312 of the optical multiplexer 310 and a fourth angle of incidence β4 of the fourth collimated light beam b4 incident to the second filter 312 of the optical multiplexer 310 have a same value and are in opposite directions.

In other words, the first angle of incidence β1 is the same as the third angle of incidence β3, and the second angle of incidence β2 is the same as the fourth angle of incidence β4. The first angle of incidence β1 is different from the second angle of incidence β2, and the third angle of incidence β3 is different from the fourth angle of incidence β4.

It is explained herein that the same angles of incidence herein mean that the angles of incidence have the same value and are in the same direction. The different angles of incidence mean that the angles of incidence have different values and are in different directions, that is, the angles of incidence are different.

The first angle of incidence β1 and the second angle of incidence β2 have the same value and are in opposite directions. The third angle of incidence β3 and the fourth angle of incidence β4 have the same value and are in opposite directions.

Based on a characteristic of the optical multiplexer 310, the optical multiplexer 310 combines the first collimated light beam b1 and the third collimated light beam b3 and then emits a first combined light beam c1. The optical multiplexer 310 combines the second collimated light beam b2 and the fourth collimated light beam b4 and then emits a second combined light beam c2.

The first combined light beam c1 and the second combined light beam c2 are symmetrical about the optical axis. In other words, an included angle between the first combined light beam c1 and the optical axis and an included angle between the second combined light beam c2 and the optical axis have a same value and are in opposite directions.

Alternatively, for example, the first filter 311 intersects with the optical axis of the first lens 210, and the first filter 311 is not perpendicular to the optical axis of the first lens 210. The second filter 312 intersects with the optical axis of the second lens 220, and the second filter 312 is not perpendicular to the optical axis of the second lens 220.

In this way, the first angle of incidence β1 of the first collimated light beam b1 incident to the optical multiplexer 310 is different from the second angle of incidence β2 of the second collimated light beam b2 incident to the optical multiplexer 310. The direction of the first angle of incidence β1 and the direction of the second angle of incidence β2 depend on the included angle α1 between the first collimated light beam b1 and the optical axis of the first lens 210 and the included angle α2 between the second collimated light beam b2 and the optical axis of the first lens 210.

The third angle of incidence β3 of the third collimated light beam b3 incident to the optical multiplexer 310 is different from the fourth angle of incidence β4 of the fourth collimated light beam b4 incident to the optical multiplexer 310. The direction of the third angle of incidence β3 and the direction of the fourth angle of incidence β4 depend on the included angle between the third collimated light beam b3 and the optical axis of the second lens 220 and the included angle between the fourth collimated light beam b4 and the optical axis of the second lens 220.

The values and the directions of the first angle of incidence β1, the second angle of incidence β2, the third angle of incidence β3, and the fourth angle of incidence β4 are not limited in embodiments of this application, and may be appropriately set based on an actual situation, provided that the first angle of incidence β1 is the same as the third angle of incidence β3, the second angle of incidence β2 is the same as the fourth angle of incidence β4, the first angle of incidence β1 is different from the second angle of incidence β2, and the third angle of incidence β3 is different from the fourth angle of incidence β4. For example, the first angle of incidence β1 is different from the second angle of incidence β2. The first angle of incidence β1 and the second angle of incidence β2 may have different values, or the first angle of incidence β1 and the second angle of incidence β2 may be in different directions, or the first angle of incidence β1 and the second angle of incidence β2 may have different values and be in different directions. For example, the third angle of incidence β3 is different from the fourth angle of incidence β4. The third angle of incidence β3 and the fourth angle of incidence β4 may have different values, or the third angle of incidence β3 and the fourth angle of incidence β4 may be in different directions, or the third angle of incidence β3 and the fourth angle of incidence β4 may have different values and be in different directions.

For ease of illustration, the following uses an example in which the first angle of incidence β1 and the second angle of incidence β2 have the same value and are in opposite directions, and the third angle of incidence β3 and the fourth angle of incidence β4 have the same value and are in opposite directions for description.

Still refer to FIG. 4. The optical multiplexer 310 combines the first collimated light beam b1 emitted from the first lens 210 and the third collimated light beam b3 emitted from the second lens 220, and emits the first combined light beam c1. The optical multiplexer 310 combines the second collimated light beam b2 emitted from the first lens 210 and the fourth collimated light beam b4 emitted from the second lens 220, and emits the second combined light beam c2. In this way, a multi-channel serial solution is implemented.

For example, as shown in FIG. 6, the optical component 10 further includes a first optical fiber ferrule 410 and a second optical fiber ferrule 420.

Both the first optical fiber ferrule 410 and the second optical fiber ferrule 420 are located on a light emergence side of the optical multiplexer 310. An optical fiber is coupled in each of the first optical fiber ferrule 410 and the second optical fiber ferrule 420.

The first optical fiber ferrule 410 is configured to receive the first combined light beam c1, and the second optical fiber ferrule 420 is configured to receive the second combined light beam c2, to output an optical signal.

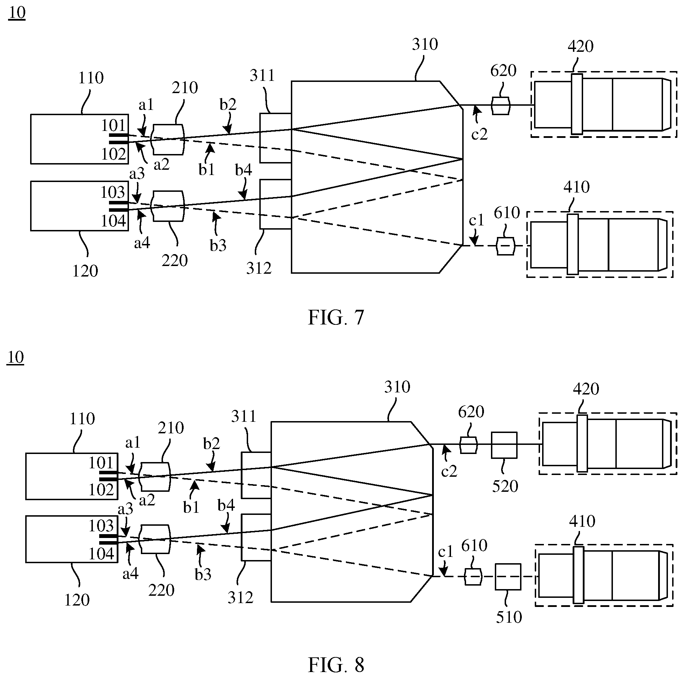

In some embodiments, as shown in FIG. 7, the optical component 10 further includes a first converging lens 610 and a second converging lens 620.

The first converging lens 610 is located on the light emergence side of the optical multiplexer 310. The first converging lens 610 is located on a light incidence side of the first optical fiber ferrule 410. The second converging lens 620 is located on the light emergence side of the optical multiplexer 310. The second converging lens 620 is located on a light incidence side of the second optical fiber ferrule 420.

In other words, the first converging lens 610 is located on a transmission optical path of the first combined light beam c1. The second converging lens 620 is located on a transmission optical path of the second combined light beam c2.

The first converging lens 610 is configured to converge the first combined light beam c1, and the second converging lens 620 is configured to converge a second combined light beam c2, so that the first combined light beam c1 can be better transmitted to the first optical fiber ferrule 410, and the second combined light beam c2 can be better transmitted to the second optical fiber ferrule 420.

In some embodiments, as shown in FIG. 8, the optical component 10 further includes a first isolator 510 and a second isolator 520. Both the first isolator 510 and the second isolator 520 are located on the light emergence side of the optical multiplexer 310. The first isolator 510 is further located on the light incidence side of the first optical fiber ferrule 410. The second isolator 520 is further located on the light incidence side of the second optical fiber ferrule 420.

In other words, the first isolator 510 is located on the transmission optical path of the first combined light beam c1. The second isolator 520 is located on the transmission optical path of the second combined light beam c2.

A function of the first isolator 510 is to enable the first combined light beam c1 to be transmitted unidirectionally, to avoid a case in which the light beam from is reflected to the first laser 110 or the second laser 120, causing a damage to the first laser 110 and the second laser 120. A function of the second isolator 520 is to enable the second combined light beam c2 to be transmitted unidirectionally, to avoid a case in which the light beam from is reflected to the first laser 110 or the second laser 120, causing a damage to the first laser 110 and the second laser 120.

It is explained herein that the first isolator 510 may be located on a light emergence side of the first converging lens 610, or may be located on a light incidence side of the first converging lens 610. The second isolator 520 may be located on a light emergence side of the second converging lens 620, or may be located on a light incidence side of the second converging lens 620. This is not limited in embodiments of this application, and may be appropriately set based on an actual situation.

It is explained herein that FIG. 8 is illustrated by using four serial channels. In embodiments of this application, a quantity of channels is not limited. For example, the quantity of channels may be 2n, or may be 2ⁿ, where n is an integer greater than 0. For example, the quantity of channels may be 6, 8, or 16.

In some embodiments, the optical component 10 further includes a third laser and a third lens.

For example, the third laser has a fifth light outlet and a sixth light outlet. The fifth light outlet is configured to emit a fifth light beam. The sixth light outlet is configured to emit a sixth light beam. The third lens is configured to collimate the fifth light beam, and emit a fifth collimated light beam; and is configured to collimate the sixth light beam, and emit a sixth collimated light beam.

Correspondingly, the optical multiplexer 310 further includes a third filter. The fifth light beam and the sixth light beam are incident to the optical multiplexer 310 through the third filter. The third filter is perpendicular to an optical axis of the third lens.

The optical multiplexer 310 is configured to combine the first collimated light beam b1, the third collimated light beam b3, and the fifth collimated light beam, and emit the first combined light beam c1; and is configured to combine the second collimated light beam b2, the fourth collimated light beam b4, and the sixth collimated light beam, and emit the second combined light beam c2.

In this way, a serial solution for six-channel optical paths can be implemented.

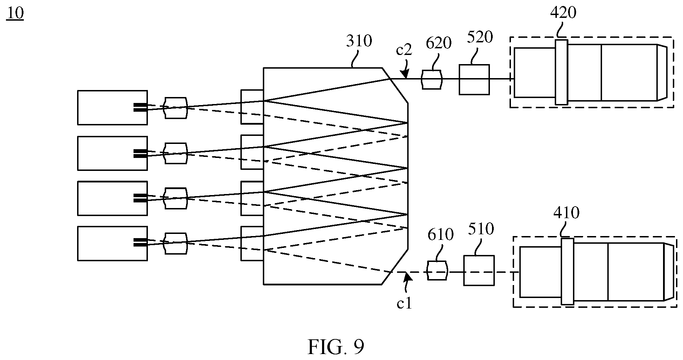

In some other embodiments, the optical component 10 further includes a third laser, a fourth laser, a third lens, and a fourth lens. In other words, as shown in FIG. 9, the optical component 10 includes four lasers and four lenses.

For example, the fourth laser has a seventh light outlet and an eighth light outlet. The seventh light outlet is configured to emit a seventh light beam. The eighth light outlet is configured to emit an eighth light beam. The fourth lens is configured to collimate the seventh light beam, and emit a seventh collimated light beam; and is configured to collimate the eighth light beam, and emit an eighth collimated light beam.

Correspondingly, the optical multiplexer 310 further includes a third filter and a fourth filter. The fifth light beam and the sixth light beam are incident to the optical multiplexer 310 through the third filter. The seventh light beam and the eighth light beam are incident to the optical multiplexer 310 through the fourth filter. The third filter is perpendicular to an optical axis of the third lens. The fourth filter is perpendicular to an optical axis of the fourth lens.

The optical multiplexer 310 is configured to combine the first collimated light beam b1, the third collimated light beam b3, the fifth collimated light beam, and the seventh collimated light beam, and emit the first combined light beam c1; and is configured to combine the second collimated light beam b2, the fourth collimated light beam b4, the sixth collimated light beam, and the eighth collimated light beam, and emit the second combined light beam c2.

In this way, a serial solution for eight-channel optical paths can be implemented.

It is explained herein that the optical component 10 shown in FIG. 9 may be considered as including two first lasers 110, two second lasers 120, two first lenses 210, and two second lenses 220. In other words, the optical component 10 shown in FIG. 9 may be considered as a combination of a plurality of optical components 10 shown in FIG. 8. A quantity of lasers and a quantity of lenses are not limited in embodiments of this application, and may be appropriately set based on an actual requirement.

The optical component 10 provided in embodiments of this application includes the first laser 110 having the first light outlet 101 and the second light outlet 102, the second laser 120 having the third light outlet 103 and the fourth light outlet 104, the first lens 210 located on the light emergence side of the first laser 110, the second lens 220 located on the light emergence side of the second laser 120, and the optical multiplexer 310 located on the light emergence side of the first lens 210 and the second lens 220. The first light outlet 101 is configured to emit the first light beam a1. The second light outlet 102 is configured to emit the second light beam a2. The third light outlet 103 is configured to emit the third light beam a3. The fourth light outlet 104 is configured to emit the fourth light beam a4. The first lens 210 is configured to separately collimate the first light beam a1 and the second light beam a2, and emit the first collimated light beam b1 and the second collimated light beam b2. The second lens 220 is configured to separately collimate the third light beam a3 and the fourth light beam a4, and emit the third collimated light beam b3 and the fourth collimated light beam b4. The optical multiplexer 310 is configured to combine the first collimated light beam b1 and the third collimated light beam b3, and emit the first combined light beam c1; and is configured to combine the second collimated light beam b2 and the fourth collimated light beam b4, and emit the second combined light beam c2. Compared with an existing solution in which one laser has only one light outlet, and one laser corresponds to one lens, in embodiments of this application, both the first laser 110 and the second laser 120 have two light outlets that can emit two beams of light, and one laser corresponds to one lens. To be specific, the first laser 110 corresponds to the first lens 210, and the second laser 120 corresponds to the second lens 220. Compared with conventional technologies, quantities of required lasers and lenses are reduced by half. In addition, in the conventional technologies, for an 800 G 2*FR4 multi-channel parallel optical component 10, two optical multiplexers 310 need to be disposed. However, in embodiments of this application, only one optical multiplexer 310 is required, and collimated light beams that are separately collimated by the lens are incident to the optical multiplexer 310. In addition, the first angle of incidence at which the first collimated light beam b1 is incident to the optical multiplexer 310 is the same as the third angle of incidence at which the third collimated light beam b3 is incident to the optical multiplexer 310, and the second angle of incidence at which the second collimated light beam b2 is incident to the optical multiplexer 310 is the same as the fourth angle of incidence at which the fourth collimated light beam b4 is incident to the optical multiplexer 310, so that the first collimated light beam b1 and the third collimated light beam b3 can be combined into the first combined light beam c1 by using the optical multiplexer 310, and the second collimated light beam b2 and the fourth collimated light beam b4 can be combined into the second combined light beam c2 by using the optical multiplexer 310. In addition, the first angle of incidence is different from the second angle of incidence, and the third angle of incidence is different from the fourth angle of incidence, so that an angle of emergence of the first combined light beam c1 is different from an angle of emergence of the second combined light beam c2, to subsequently transmit the light beams through two channels. According to the optical component 10 provided in embodiments of this application, a quantity of optical elements used in the optical component can be reduced, to reduce a size of a packaging structure and simplify a packaging process.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An optical component, comprising:
a first laser, having a first light outlet and a second light outlet, wherein the first light outlet is configured to emit a first light beam, and the second light outlet is configured to emit a second light beam;
a second laser, having a third light outlet and a fourth light outlet, wherein the third light outlet is configured to emit a third light beam, and the fourth light outlet is configured to emit a fourth light beam;
a first lens, located on a light emergence side of the first laser, wherein the first lens is configured to separately collimate the first light beam and the second light beam, and emit a first collimated light beam and a second collimated light beam;
a second lens, located on a light emergence side of the second laser, wherein the second lens is configured to separately collimate the third light beam and the fourth light beam, and emit a third collimated light beam and a fourth collimated light beam; and
an optical multiplexer, located on a light emergence side of the first lens and the second lens, wherein the optical multiplexer is configured to combine the first collimated light beam and the third collimated light beam, and emit a first combined light beam; and is configured to combine the second collimated light beam and the fourth collimated light beam, and emit a second combined light beam, wherein a first angle of incidence at which the first collimated light beam is incident to the optical multiplexer is the same as a third angle of incidence at which the third collimated light beam is incident to the optical multiplexer, a second angle of incidence at which the second collimated light beam is incident to the optical multiplexer is the same as a fourth angle of incidence at which the fourth collimated light beam is incident to the optical multiplexer, the first angle of incidence is different from the second angle of incidence, and the third angle of incidence is different from the fourth angle of incidence.

2. The optical component according to claim **1,** wherein at least a first filter and a second filter are disposed on a light incidence surface of the optical multiplexer, the first filter is perpendicular to an optical axis of the first lens, and the second filter is perpendicular to an optical axis of the second lens.

3. The optical component according to claim 1 or 2, wherein a distance from the first light outlet to the optical axis of the first lens is the same as a distance from the second light outlet to the optical axis of the first lens; and
a distance from the third light outlet to the optical axis of the second lens is the same as a distance from the fourth light outlet to the optical axis of the second lens.

4. The optical component according to any one of claims 1 to 3, wherein both the first light outlet and the second light outlet are located on a focal plane of the first lens; and
both the third light outlet and the fourth light outlet are located on a focal plane of the second lens.

5. The optical component according to any one of claims 1 to 4, wherein a wavelength of the first light beam is the same as a wavelength of the second light beam; and
a wavelength of the third light beam is the same as a wavelength of the fourth light beam.

6. The optical component according to any one of claims 1 to 5, wherein the wavelength of the first light beam is different from the wavelength of the third light beam.

7. The optical component according to any one of claims 1 to 6, wherein the optical component further comprises a first converging lens and a second converging lens, the first converging lens and the second converging lens are located on a light emergence side of the optical multiplexer, the first converging lens is configured to converge the first combined light beam, and the second converging lens is configured to converge the second combined light beam.

8. The optical component according to any one of claims 1 to 7, wherein the optical component further comprises a first isolator and a second isolator, and the first isolator and the second isolator are located on the light emergence side of the optical multiplexer.

9. The optical component according to any one of claims 1 to 8, wherein the optical component further comprises a first optical fiber ferrule and a second optical fiber ferrule, the first optical fiber ferrule is configured to receive the first combined light beam, and the second optical fiber ferrule is configured to receive the second combined light beam.

10. An optical module, comprising the optical component according to any one of claims 1 to 9 and a receiving optical sub-assembly, wherein the receiving optical sub-assembly receives an optical signal transmitted by the optical component.

11. An electronic device, comprising the optical module according to claim 10 and a printed circuit board, wherein the optical module is electrically connected to the printed circuit board.
